# EUROPÄISCHE PATENTSCHRIFT

(11) **EP 1 482 217 B1**
(45) Veröffentlichungstag und Bekanntmachung des Hinweises auf die Patenterteilung: **08.08.2012**
(21) Anmeldenummer: 04102195.7
(22) Anmeldetag: 18.05.2004
(51) Int. Cl.: F16H 61/04

(54) **Getriebeanordnung und Verfahren zum Betreiben einer Getriebeanordnung**
Transmission arrangement and its operation method
Ensemble de transmission et son procédé de commande

(30) Priorität: 27.05.2003 DE 10324095
(43) Veröffentlichungstag der Anmeldung: 01.12.2004
(73) Patentinhaber: DEERE & COMPANY, Moline, Illinois 61265-8098 (US)
(72) Erfinder: Reinards, Marco, 54608 Bleialf (DE); Tarasinski, Nicolai, Dr., 67227 Frankenthal (DE)
(74) Vertreter: Holst, Sönke

(56) Entgegenhaltungen:
- WO-A-02/057109
- DE-A1- 19 517 888
- DE-A1- 19 600 835
- GB-A- 2 350 161
- US-A- 4 637 269
- US-A- 4 858 495
- US-A1- 2001 011 484

## Beschreibung

Die vorliegende Erfindung betrifft ein Fahrzeug mit einer Getriebeanordnung zur Übertragung eines von einem Antriebsaggregat erzeugten Drehmoments auf eine Antriebsachse eines Fahrzeugs, mit einem Lastschaltgetriebe und einer Fahrkupplung. Weiterhin betrifft die vorliegende Erfindung ein Fahrzeug mit einer Getriebeanordnung und ein Verfahren zum Betreiben einer Getriebeanordnung.

Getriebeanordnungen der genannten Art sind aus dem Stand der Technik insbesondere bei landwirtschaftlichen Nutzfahrzeugen, beispielsweise bei Traktoren, bekannt. Beim Schalten des Lastschaltgetriebes entsteht ein spürbarer Schaltruck, da die die unterschiedlichen Übersetzungen des Lastschaltgetriebes schaltenden Lamellenkupplungen unmoduliert hydraulisch geöffnet bzw. geschlossen werden. Dies führt zu deutlichen Drehmomentschwankungen im Antriebsstrang des Fahrzeugs, was von einem Fahrer des Fahrzeugs als ruckartig und unangenehm empfunden wird und was daher den Fahrkomfort verringert.

Eine Unterdrückung des Schaltrucks könnte beispielsweise durch eine entsprechende Ansteuerung des Antriebsaggregats erzielt werden, so dass eine Art Synchronisation der Ausgangsdrehzahl des Antriebsaggregats mit der neuen Lastgetriebeschaltstufe erfolgt. Diese Ansteuerung des Antriebsaggregats könnte jedoch aufwendig zu realisieren sein, da die im Allgemeinen komplexe Steuerung eines Antriebsaggregats dann um eine weitere Funktionalität noch zu erweitern wäre. Auch kann eine solche Ansteuerung einen erhöhten Kraftstoffverbrauch eines in Form eines Verbrennungsmotors ausgeführten Antriebsaggregats zur Folge haben.

Aus der DE 196 00 835 A1 ist eine Getriebeanordnung für Fahrzeuge bekannt, die ein Lastschaltgetriebe, mindestens eine Lamellenkupplung und ein weiteres Lastschaltgetriebe zum Schalten für größere Geschwindigkeitsbereiche aufweist. Zum Unterdrücken des Schaltdrucks beim Schaltvorgang des Lastschaltgetriebes wird vom Fahrer ein Knopf manuell betätigt, wodurch die dort vorgesehene Lamellenkupplung für einen vorgebbaren Zeitraum geöffnet wird. Insoweit soll hierdurch der durch den Schaltvorgang des Lastschaltgetriebes entstehende Schaltruck verringert oder vermieden werden.

Durch ein vollständiges Öffnen der in der DE 196 00 835 A1 vorgesehenen Lamellenkupplung wird jedoch der Kraftschluss zwischen Antriebsaggregat und Antriebsachse für den vorgebbaren Zeitraum unterbrochen, was bei einem Betrieb des Fahrzeugs unter Last oder bei einer Bergauffahrt dazu führt, dass das Fahrzeug zum Stillstand kommt oder zumindest seine Geschwindigkeit nicht beibehalten kann. Dies wiederum führt ebenfalls zu einem Fahrruck, der in nahezu gleicher Weise den Fahrkomfort verringert. Außerdem ist ein Öffnen der dort vorgesehenen Lamellenkupplung nur in den beiden oberen Gängen des Lastschaltgetriebes zum Schalten für größere Geschwindigkeitsbereiche möglich, da das Fahrzeug in diesen Geschwindigkeitsbereichen in der Regel genügend kinetische Energie aufweist, so dass es nicht zu einem Stillstand des Fahrzeugs kommen sollte.

Die der Erfindung zugrunde liegende Aufgabe wird darin gesehen, ein Fahrzeug mit einer Getriebeanordnung der eingangs genannten Art anzugeben, durch welche die vorgenannten Probleme überwunden werden. Insbesondere soll der durch den Schaltvorgang des Lastschaltgetriebes hervorgerufene Fahrruck zumindest weitgehend ausgeglichen werden und hierbei ein Stillstand des Fahrzeugs vermieden werden. Weiterhin soll ein Fahrzeug und ein Verfahren zur Ansteuerung einer Getriebeanordnung angegeben und weitergebildet werden, bei dem die vorgenannten Probleme überwunden werden.

Bezüglich dem Fahrzeug wird die Aufgabe erfindungsgemäß durch die Lehre des Patentanspruchs 1 gelöst. Weitere vorteilhafte Ausgestaltungen und Weiterbildungen der Erfindung gehen aus den Unteransprüchen hervor.

Bei dem erfindungsgemäßen Fahrzeug handelt es sich insbesondere um ein landwirtschaftliches oder industrielles Nutzfahrzeug, beispielsweise um einen Traktor oder ein Baugerät.

Hierbei wird in erfindungsgemäßer Weise die Tatsache ausgenützt, dass das von einer Kupplung übertragene Drehmoment von dem Schließdruck abhängig ist, mit dem die Kupplung beaufschlagt wird. Dies ist insbesondere bei einer hydraulisch betätigbaren Kupplung der Fall, die mit relativ geringem Aufwand beispielsweise elektromagnetisch angesteuert werden kann. Somit wird der durch den Schaltvorgang des Lastschaltgetriebes hervorgerufene Schaltstoß durch einen kurzzeitigen Schlupf der Fahrkupplung weitgehend kompensiert, so dass in vorteilhafter Weise der Schaltruck so gut wie nicht auftritt und der Fahrkomfort verbessert wird. Erfindungsgemäß ist hierbei kein Eingriff in die Ansteuerung des Antriebsaggregats erforderlich, so dass die damit verbundenen Probleme umgangen werden. Auch kann das Lastschaltgetriebe in allen Schaltstufen unter Last geschaltet werden, ohne die Übertragung des Drehmoments vom Antriebsaggregat auf die Antriebsachse zu unterbrechen. Durch das automatische Einleiten des Öffnungsvorgangs der Fahrkupplung wird eine Fehlbedienung der Getriebeanordnung weitgehend vermieden. So kann beispielsweise bei der aus der DE 196 00 835 A1 bekannten Getriebeanordnung dann eine Fehlbedienung auftreten, wenn der Fahrer zwar den dort vorgesehenen Knopf betätigt und dementsprechend die Fahrkupplung für die eingestellte Zeitspanne vollständig geöffnet wird, er jedoch den Schaltvorgang - warum auch immer - nicht ausführt.

In einer bevorzugten Ausführungsform ist bei der Getriebeanordnung ein Schaltgetriebe vorgesehen, welches bei geöffneter Fahrkupplung schaltbar ist. Dieses Schaltgetriebe könnte bei einem in Form eines Traktors ausgeführten Fahrzeug als sogenanntes Gruppenschaltgetriebe ausgeführt sein, mit dem über größere Geschwindigkeitsbereiche geschaltet werden kann. Das Schaltgetriebe ist vorzugsweise in Form eines synchronisierten Schaltgetriebes ausgeführt und zwischen dem Antriebsaggregat und der Antriebsachse angeordnet.

Im Konkreten könnte die Anordnung der einzelnen Baugruppen zwischen Antriebsaggregat und Antriebsachse eines Fahrzeugs derart sein, dass dem Antriebsaggregat das Lastschaltgetriebe, diesem die Fahrkupplung und dieser wiederum das Schaltgetriebe nachgeordnet ist. Insoweit kann hierdurch eine modulare Bauweise realisiert werden, die hinsichtlich einer vielseitigen Produktlinie vorteilhaft ist.

Bevorzugt wird die Fahrkupplung manuell, elektro-hydraulisch oder magneto-hydraulisch betätigt. Eine manuelle Betätigung der Fahrkupplung eines Fahrzeugs ist üblicherweise über ein Kupplungspedal realisiert und wird vom Fahrer eines in Form eines Traktors ausgebildeten Fahrzeugs beim Schalten des Gruppenschaltgetriebes betätigt. Eine elektro-hydraulische oder magneto-hydraulische Betätigung der Fahrkupplung eines Fahrzeugs ist im Fall eines Traktors zusätzlich zur manuellen Betätigung der Fahrkupplung vorgesehen, um nämlich das erfindungsgemäße Öffnen der Fahrkupplung während des Schaltvorgangs des Lastschaltgetriebes gezielt ansteuern zu können.

Neben der bereits erwähnten Betätigungsart der Fahrkupplung mittels Kupplungspedal könnte die Fahrkupplung auch von einem Fahrtrichtungshebel ansteuerbar sein. Bei landwirtschaftlichen oder industriellen Nutzfahrzeugen ist das Durchführen einer unmittelbaren Fahrtrichtungsumkehr notwendig, die durch die Betätigung eines Fahrtrichtungshebels eingeleitet wird. Die Ansteuerung der Fahrkupplung könnte insbesondere mit Hilfe eines Proportional-Druckregelventils erfolgen, mit dem eine nur teilweise Öffnung der Fahrkupplung zum Durchführen des erfindungsgemäßen Schaltvorgangs des Lastschaltgetriebes mit geringem konstruktiven Aufwand realisierbar ist.

In einer bevorzugten Ausführungsform ist bei einem Schaltvorgang des Lastschaltgetriebes die Fahrkupplung mit einer vorgebbaren Charakteristik und/oder Kennlinie ansteuerbar. Hierbei könnte eine Kennlinie in Form einer Lookup-Tabelle in einer der Fahrkupplung zugeordneten Steuereinrichtung abgespeichert sein, die beispielsweise die Hydraulikdruckwerte einer hydraulisch betätigbaren Kupplung als Funktion der Zeit enthält, ab der der Schaltvorgang eingeleitet wird. Zwischen den einzelnen Werten könnte ein linearer Hydraulikdruckverlauf angesteuert werden. Da der zeitliche Verlauf der Fahrkupplungsbetätigung zwischen Hoch- und Zurückschalten unterschiedlich ist, sind vorzugsweise zwei Lookup-Tabellen vorgesehen.

In einer besonders bevorzugten Ausführungsform ist bei einem Schaltvorgang des Lastschaltgetriebes die Fahrkupplung mit einer Charakteristik und/oder Kennlinie ansteuerbar, die in Abhängigkeit des momentan vorliegenden Betriebszustands des Fahrzeugs und/oder des Antriebsaggregats erfolgt. Hierdurch kann in vorteilhafter Weise beispielsweise auf unterschiedliche Fahrzustände individuell eingegangen werden, wobei das Fahrzeug bei gleichbleibendem Fahrkomfort vielseitig einsetzbar ist. Insbesondere ist das von der Fahrkupplung zu übertragende Mindestdrehmoment beim Schaltvorgang des Lastschaltgetriebes bei einer Bergauffahrt unterschiedlich zu dem bei einer Bergabfahrt. So könnte eine Berechnung der Charakteristik bzw. der Kennlinie aufgrund der Fahrkupplungseingangsdrehzahl und der Last durch eine Interpolation aus einem Kennfeld erfolgen. Dieses Kennfeld könnte ebenfalls eine oder mehrere Lookup-Tabellen aufweisen, wobei Werte, die tatsächlich vorliegen bzw. gemessen werden und die nicht in einer Lookup-Tabelle abgelegt sind mittels Interpolation berechnet werden könnten. Ebenfalls wäre denkbar, dass die in dem Kennfeld vorliegenden Werte dynamisch aktualisiert werden, wobei eine Aktualisierung beispielsweise aufgrund von Messungen der Fahrzeuggeschwindigkeit, der Drehzahl des Antriebsaggregats etc. erfolgen könnte.

Vorzugsweise ist eine Steuereinheit vorgesehen, mit welcher die Kennlinie berechenbar ist. Diese Steuereinheit könnte beispielsweise in Form einer Leiterplatte oder eines Einplatinencomputers ausgeführt sein.

In einer ganz besonders bevorzugten Ausführungsform ist während des Schaltvorgangs des Lastschaltgetriebes mit der Fahrkupplung ein vorgebbares Mindestdrehmoment übertragbar. Dieses Mindestdrehmoment könnte - wie bereits angedeutet - aufgrund des momentanen Zustands der Getriebeanordnung bzw. des Fahrzeugs errechnet werden.

Anhand der Zeichnung, die Ausführungsbeispiele der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine schematische Darstellung eines Ausführungsbeispiels der vorliegenden Erfindung,
- Fig. 2: ein schematisches Flussdiagramm eines Programmablaufs, der während des Schaltvorgangs des Lastschaltgetriebes abläuft,
- Fig. 3: eine schematische Darstellung eines Diagramms, in dem der elektrische Stromverlauf einer Magnetspule eines Proportionalventils als Funktion der Zeit gezeigt ist und
- Fig. 4: eine schematische Darstellung eines Hydraulikschaltplans zur Ansteuerung einer Fahrkupplung.

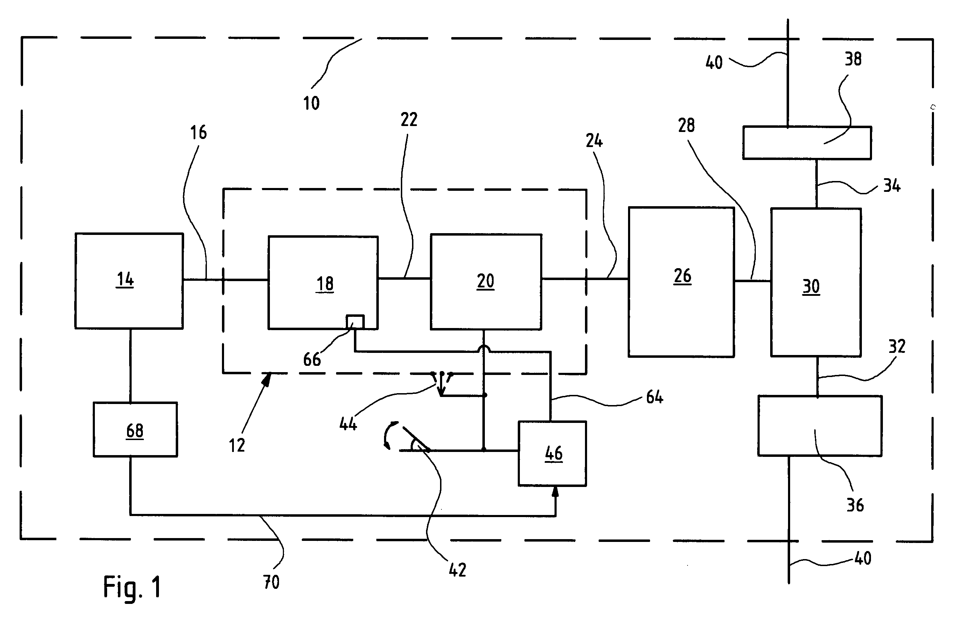

Fig. 1 zeigt ein in Form eines Traktors ausgeführtes Fahrzeug 10 mit einer erfindungsgemäßen Getriebeanordnung 12. Das Fahrzeug wird von einem in Form eines Verbrennungsmotors ausgeführten Antriebsaggregat 14 angetrieben. Über die Welle 16 wird das vom Antriebsaggregat 14 erzeugte Drehmoment zunächst auf die Getriebeanordnung 12 übertragen. Die Getriebeanordnung 12 umfasst ein Lastschaltgetriebe 18 und eine Fahrkupplung 20, die über die Welle 22 miteinander verbunden sind. Der Getriebeanordnung 12 ist über die Welle 24 ein Schaltgetriebe 26 - ein sogenanntes Gruppenschaltgetriebe - nachgeordnet, mit dem größere Geschwindigkeitsbereiche geschaltet werden können. Das Schaltgetriebe 26 wird während der Betätigung der Fahrkupplung 20 geschaltet und zwar durch manuelle Betätigung eines in Fig. 1 nicht gezeigten Fahrers. Das vom Schaltgetriebe 26 ausgegebene Drehmoment wird über die Welle 28 auf das Differentialgetriebe 30 übertragen, welches das Drehmoment über die Wellen 32, 34 auf die Achsgetriebe 36, 38 überträgt. Die Achsgetriebe 36, 38 geben ihrerseits das Drehmoment auf die Antriebsachse 40 des Fahrzeugs 10 aus.

In Fig. 1 ist lediglich schematisch angedeutet, dass die Fahrkupplung 20 einerseits manuell vom Fahrer mit Hilfe des Kupplungspedals 42 oder mit dem Fahrtrichtungshebel 44 initiiert bzw. betätigt werden kann. Andererseits kann die Fahrkupplung 20 magneto-hydraulisch auf ein entsprechendes Steuersignal der Steuereinrichtung 46 betätigt werden.

Erfindungsgemäß wird während eines Schaltvorgangs des Lastschaltgetriebes 18 bei einem nahezu unveränderten Betriebszustand des Antriebsaggregats 14 die Fahrkupplung 20 zumindest teilweise automatisch geöffnet, wobei hierbei stets ein verbleibendes Drehmoment vom Antriebsaggregat 14 auf die Antriebsachse 40 übertragen wird.

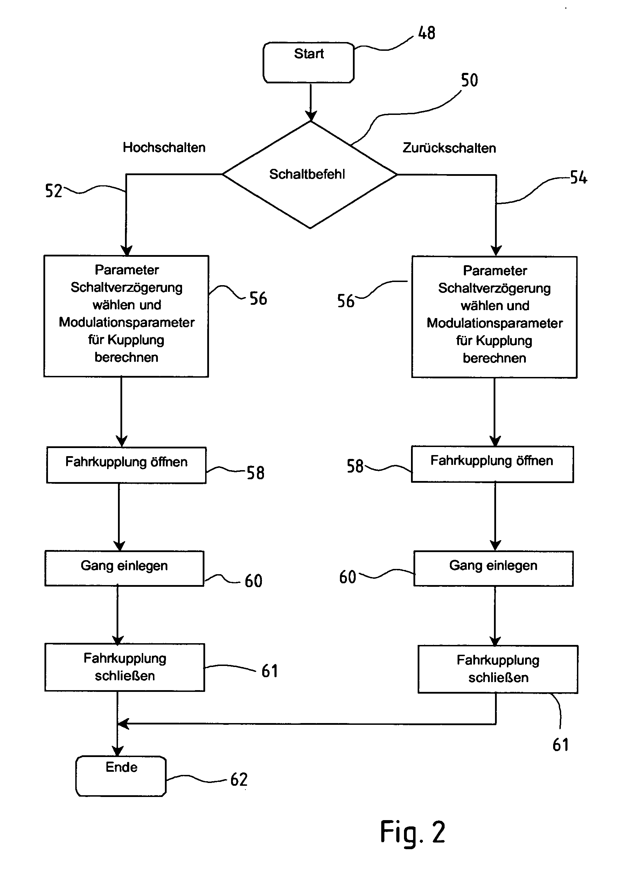

Fig. 2 zeigt schematisch in einem Ablaufdiagramm die einzelnen Verfahrens- bzw. Programmschritte, die zur Ansteuerung der erfindungsgemäßen Getriebeanordnung 12 aus Fig. 1 vorgesehen sind. Ein Schaltvorgang des Lastschaltgetriebes 18 wird mit dem Programmschritt 48 gestartet. Falls der Fahrer den Schaltbefehl für das Lastschaltgetriebe gibt, wird mit dem Programmschritt 50 festgestellt, ob hoch- oder zurückgeschaltet wird. Entsprechend verzweigt sich das Steuerprogramm gemäß den Programmverläufen 52 oder 54.

Die zwei Programmverläufe 52 und 54 umfassen die gleichen Programmschritte, wobei jedoch unterschiedliche Berechnungsgrundlagen verwendet werden und daher der Einfachheit halber für die entsprechenden Programmschritte die gleichen Bezugszeichen verwendet sind. Zunächst wird mit dem Programmschritt 56 der Parameter der Schaltverzögerung gewählt und der Modulationsgrad bzw. Modulationsparameter für die Fahrkupplung 20 berechnet. Mit dem Programmschritt 58 wird die Fahrkupplung 20 geöffnet. Der neu gewählte Gang des Lastschaltgetriebes 18 wird mit dem Programmschritt 60 eingelegt. Das Schließen der Fahrkupplung 20 erfolgt mit dem Programmschritt 61. Der Schaltvorgang ist mit dem Programmschritt 62 abgeschlossen.

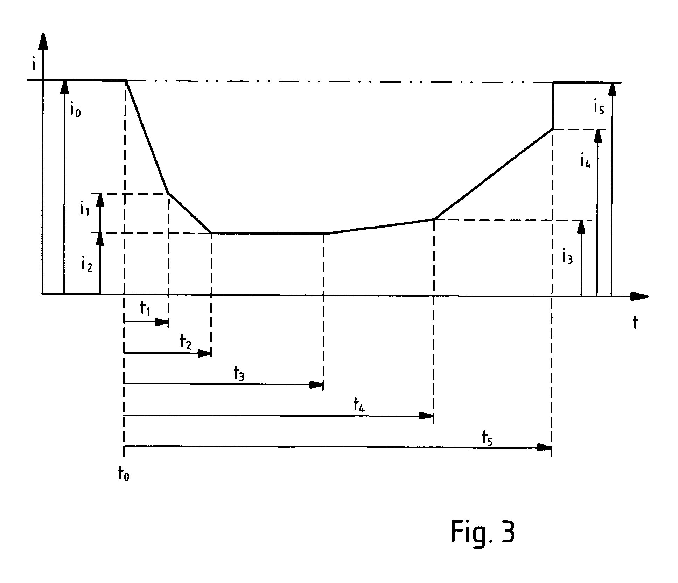

Fig. 3 zeigt schematisch ein Diagramm einer Kennlinie, in dem der elektrische Strom I, mit dem eine Magnetspule eines Proportional-Druckregelventils beaufschlagt wird, als Funktion der Zeit t aufgetragen ist. 10 und 15 repräsentiert jeweils das Stromniveau bei vollständig eingerückter Fahrkupplung 20, bei dem also das volle Drehmoment übertragen wird. Zu einem Zeitpunkt t0 wird vom Fahrer des Fahrzeugs der Schaltvorgang des Lastschaltgetriebes 18 ausgelöst. Über die Zeitspanne t1 wird der Strom linear auf den Stromwert 11 verringert. Nach einer vorgebbaren Zeitdauer, welche beispielsweise t1 in Fig. 3 entsprechen kann, wird der neue Gang des Lastschaltgetriebes 18 eingelegt. Eine weitere lineare Verringerung auf einen Stromwert 12 erfolgt in dem Zeitintervall t2 - t1. Bei dem Stromwert 12, der über die Zeitspanne t3 - t2 im Wesentlichen konstant gehalten wird, weist die Fahrkupplung 20 einen definierten Schlupf auf. In den Zeitintervallen t4 - t3 und t5 - t4 wird der elektrische Strom jeweils linear auf das Stromniveau 13 bzw. 14 erhöht. Danach wird der elektrische Strom wieder auf den Wert 15 gebracht, bei dem die Fahrkupplung 20 wieder vollständig eingerückt ist. Somit wird mit der Ansteuerung der Magnetspule des Proportional-Druckregelventils erreicht, dass während eines Schaltvorgangs des Lastschaltgetriebes 18 die Fahrkupplung 20 teilweise automatisch geöffnet wird und hierbei stets ein Restdrehmoment vom Antriebsaggregat 14 auf die Fahrzeugachse 40 übertragen wird. Das übertragene Restdrehmoment beträgt im hier vorliegenden Fall 15 % bis 20 % des vom Antriebsaggregat 14 erzeugten Drehmoments. Das Antriebsaggregat 14 verbleibt in einem nahezu unveränderten Betriebszustand.

Die in Fig. 3 gezeigte Kennlinie wird von der in Fig. 1 gezeigten Steuereinheit 46 errechnet. Hierzu wird der Steuereinheit 46 über die Verbindungsleitung 64 der aktuell vorliegende Betriebszustand des Lastschaltgetriebes 18 zugeführt, der von der Steuereinheit 66 des Lastschaltgetriebes 18 ausgegeben wird. Weiterhin wird der aktuell vorliegende Zustand des Antriebsaggregats 14 von dessen Steuereinheit 68 der Steuereinheit 46 der Fahrkupplung 20 über die Verbindungsleitung 70 zugeführt. Insoweit geht bei der Berechnung der in Fig. 3 gezeigten Kennlinie auch die aktuell vorliegende Auslastung des Antriebsaggregats 14 ein, wodurch sichergestellt wird, dass bei hoher Last am Fahrzeug keine unangenehme Verzögerung des Schaltvorgangs erfolgt.

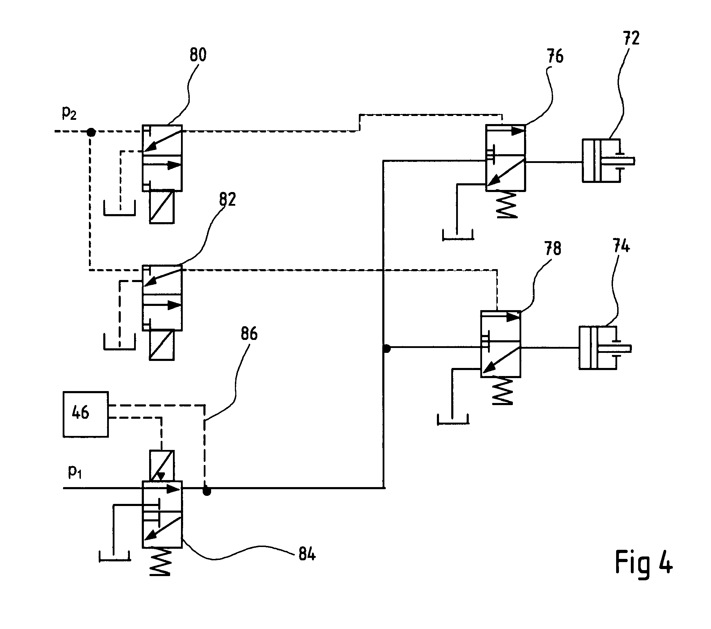

Fig. 4 zeigt in einer schematischen Darstellung einen Hydraulikschaltplan zur Ansteuerung der in Fig. 1 gezeigten Fahrkupplung 20. Im Konkreten werden zwei Kolben angesteuert, einerseits der Kupplungskolben 72 für die Vorwärtsrichtung und andererseits der Bremskolben 74 für die Rückwärtsrichtung. Dem Kupplungskolben 72 und dem Bremskolben 74 sind jeweils ein Schaltventil 76 bzw. 78 zugeordnet, die in Form eines 3/2-Wegventils ausgeführt sind. Die Schaltventile 76 bzw. 78 werden mit dem Schaltdruck p2 jeweils von den in Form eines 3/2-Wegventils ausgeführten Fahrtrichtungsventilen 80 bzw. 82 angesteuert. Sobald eines der beiden Schaltventile 76, 78 geschaltet wird, kann der jeweilige Kolben ausrücken.

In welchem Maß der jeweilige Kolben ausrückt, wird von dem Proportional-Druckregelventil 84 geregelt. An dem elektromagnetisch betätigbaren Proportional-Druckregelventil 84 liegt der Druck p1 an. Die Magnetspule des Proportional-Druckregelventils 84 wird mit dem elektrischen Stromverlauf der in Fig. 3 gezeigten Kennlinie durch die Steuereinrichtung 46 angesteuert. Dementsprechend wird das Proportional-Druckregelventil 84 geöffnet bzw. geschlossen, wobei der hinter dem Proportional-Druckregelventil 84 anliegende Druck der Hydraulikflüssigkeit mit der Sensorschleife 86 gemessen wird und auf einen vorgebbaren Druckverlauf hin ebenfalls von der Steuereinrichtung 46 eingestellt wird. Der vorgebbare Druckverlauf verläuft im Wesentlichen ähnlich wie der in Fig. 3 gezeigte elektrische Stromverlauf.

## Patentansprüche

1. Fahrzeug, insbesondere landwirtschaftliches oder industrielles Nutzfahrzeug, mit einer Getriebeanordnung (12), umfassend ein von einem Antriebsaggregat (14) angetriebenes Lastschaltgetriebe (18), eine mit dem Lastschaltgetriebe (18) verbundene Fahrkupplung (20), sowie ein der Fahrkupplung (20) nachgeordnetes Schaltgetriebe (26) zur Übertragung eines von dem Antriebsaggregat (14) erzeugten Drehmoments auf eine Antriebsachse (40) des Fahrzeugs (10), welches bei vom Fahrer manuell geöffneter Fahrkupplung (20) schaltbar ist, **dadurch gekennzeichnet, dass** die Fahrkupplung (20) während eines Schaltvorgangs des Lastschaltgetriebes (18) bei einem nahezu unveränderten Betriebszustand des Antriebsaggregats (14), d.h ohne Eingriff in die Ansteuerung des Antriebsaggregats (14) magneto-hydraulisch auf ein entsprechendes Steuersignal einer Steuereinrichtung (46) zumindest teilweise automatisch geöffnet wird, sodass hierbei stets ein verbleibendes Drehmoment vom Antriebsaggregat (14) auf die Antriebsachse (40) übertragen wird.

2. Fahrzeug nach Anspruch 1, **dadurch gekennzeichnet, dass** die Fahrkupplung (20) von einem Fahrtrichtungshebel (44) oder von einem Kupplungspedal (42) ansteuerbar ist, insbesondere mit Hilfe eines Proportional-Druckregelventils (84).

3. Fahrzeug nach Anspruch 1 oder 2, **dadurch gekennzeichnet, dass** bei einem Schaltvorgang des Lastschaltgetriebes (18) die Fahrkupplung (20) mit einer vorgebbaren Charakteristik und/oder Kennlinie ansteuerbar ist.

4. Fahrzeug nach einem der Ansprüche 1 bis 3, **dadurch gekennzeichnet, dass** bei einem Schaltvorgang des Lastschaltgetriebes (18) die Fahrkupplung (20) mit einer Charakteristik und/oder Kennlinie ansteuerbar ist, die in Abhängigkeit des momentan vorliegenden Betriebszustands des Fahrzeugs (10) und/oder des Antriebsaggregats (14) erfolgt.

5. Fahrzeug nach Anspruch 4, **dadurch gekennzeichnet, dass** die Kennlinie mit der Steuereinrichtung (46) berechenbar ist.

6. Fahrzeug nach einem der Ansprüche 1 bis 5, **dadurch gekennzeichnet, dass** während des Schaltvorgangs des Lastschaltgetriebes (18) mit der Fahrkupplung (20) ein vorgebbares Mindestdrehmoment übertragbar ist.

## Claims

1. Vehicle, in particular agricultural or industrial utility vehicle, having a transmission arrangement (12) comprising a power-shift transmission (18) driven by a drive unit (14), a drive clutch (20) connected to the power-shift transmission (18), and also a manual transmission (26), downstream of the drive clutch (20), for transmitting a torque generated by the drive unit (14) to a drive axle (40) of the vehicle (10), said manual transmission (26) being shiftable with the drive clutch (20) opened manually by the driver, **characterized in that**, during a shifting operation of the power-shift transmission (18) given a virtually unchanged operating state of the drive unit (14), i.e. without intervention in the control of the drive unit (14), the drive clutch (20) is at least partially automatically opened magneto-hydraulically in response to a corresponding control signal from a control device (46), and as a result a residual torque is always transmitted from the drive unit (14) to the drive axle (40).

2. Vehicle according to Claim 1, **characterized in that** the drive clutch (20) is controllable by a direction-of-travel lever (44) or by a clutch pedal (42), in particular with the aid of a proportional pressure control valve (84).

3. Vehicle according to Claim 1 or 2, **characterized in that**, during a shifting operation of the power-shift transmission (18), the drive clutch (20) is controllable with a predefinable characteristic.

4. Vehicle according to one of Claims 1 to 3, **characterized in that**, during a shifting operation of the power-shift transmission (18), the drive clutch (20) is controllable with a characteristic which takes place in dependence on the current operating state of the vehicle (10) and/or of the drive unit (14).

5. Vehicle according to Claim 4, **characterized in that** the characteristic can be calculated by way of the control device (46).

6. Vehicle according to one of Claims 1 to 5, **characterized in that**, during the shifting operation of the power-shift transmission (18), a predefinable minimum torque can be transmitted by way of the drive clutch (20).

## Revendications

1. Véhicule, notamment véhicule utilitaire agricole ou industriel, avec un ensemble de transmission (12), comprenant une boîte de vitesses en charge (18) entraînée par un groupe d'entraînement (14), un embrayage de conduite (20) relié à la boîte de vitesses en charge (18) ainsi qu'une boîte de vitesses (26) placée en aval de l'embrayage de conduite (20) en vue de transmettre un couple de rotation produit par le groupe d'entraînement (14) à un axe d'entraînement (40) du véhicule (10), ledit groupe pouvant être commuté lorsque l'embrayage de conduite (20) est ouvert manuellement par le conducteur, **caractérisé en ce que** l'embrayage de conduite (20) est ouvert au moins en partie automatiquement de façon magnéto-hydraulique pendant un processus de changement de vitesse de la boîte de vitesses en charge (18) avec un état de fonctionnement presque inchangé du groupe d'entraînement (14), c'est-à-dire sans intervention dans le pilotage du groupe d'entraînement (14), à réception d'un signal de commande correspondant d'un dispositif de commande (46), de façon à ce qu'un couple de rotation restant soit transmis en permanence du groupe d'entraînement (14) à l'axe d'entraînement (40).

2. Véhicule selon la revendication 1, **caractérisé en ce que** l'embrayage de conduite (20) peut être commandé par un levier de direction de conduite (44) ou par une pédale d'embrayage (42), notamment à l'aide d'une soupape de réglage de pression proportionnelle (84).

3. Véhicule selon la revendication 1 ou 2, **caractérisé en ce que** l'embrayage de conduite (20) peut être commandé à l'aide d'une caractéristique et/ou d'une courbe caractéristique prédéfinie lors d'un processus de changement de vitesse de la boîte de vitesses en charge (18).

4. Véhicule selon l'une quelconque des revendications 1 à 3, **caractérisé en ce qu'**en cas de processus de changement de vitesse de la boîte de vitesses en charge (18), l'embrayage de conduite (20) peut être commandé à l'aide d'une caractéristique et/ou d'une courbe caractéristique dépendant de l'état de fonctionnement actuel du véhicule (10) et/ou du groupe d'entraînement (14).

5. Véhicule selon la revendication 4, **caractérisé en ce que** la courbe caractéristique peut être calculée à l'aide du dispositif de commande (46).

6. Véhicule selon l'une quelconque des revendications 1 à 5, **caractérisé en ce qu'**un couple de rotation minimal prédéfinissable peut être transmis à l'aide de l'embrayage de conduite (20) pendant le processus de changement de vitesse de la boîte de vitesses en charge (18).
